# EUROPÄISCHE PATENTSCHRIFT

(11) **EP 3 420 317 B1**
(45) Veröffentlichungstag und Bekanntmachung des Hinweises auf die Patenterteilung: **01.12.2021**
(21) Anmeldenummer: 17707268.3
(22) Anmeldetag: 24.02.2017
(51) Int. Cl.: G01D 5/20, G01D 5/244

(54) **DREHWINKELSENSOR**
ROTATION ANGLE SENSOR
CAPTEUR D'ANGLE DE ROTATION

(30) Priorität: 24.02.2016 DE 102016202859
(43) Veröffentlichungstag der Anmeldung: 02.01.2019
(73) Patentinhaber: Robert Bosch GmbH, 70442 Stuttgart (DE)
(72) Erfinder: UTERMOEHLEN, Fabian, 71229 Leonberg (DE); MERZ, Andreas, 71691 Freiberg Am Neckar (DE)
(86) Internationale Anmeldenummer: PCT/EP2017/054282
(87) Internationale Veröffentlichungsnummer: WO 2017/144640

(56) Entgegenhaltungen:
- EP-A2- 2 570 776
- DE-A1- 19 738 836
- US-A1- 2014 225 600
- US-B1- 6 534 970

## Beschreibung

### Gebiet der Erfindung

Die Erfindung betrifft einen Drehwinkelsensor, mit dem beispielsweise ein Drehwinkel zwischen einer Welle und einem weiteren Bauteil bestimmt werden kann.

### Stand der Technik

Um Drehwinkel zu messen, sind beispielsweise Drehwinkelsensoren bekannt, bei denen ein Magnet über einen entsprechenden Magnetfeldsensor gedreht wird. Die Messung des Magnetfeldvektors erlaubt dann einen Rückschluss auf den Drehwinkel. Derartige Sensoren reagieren auch auf externe Magnetfelder, die beispielsweise durch einen Stromfluss von benachbart angeordneten Stromkabeln verursacht werden und können sehr störempfindlich sein.

Ein weiterer Typ Drehwinkelsensor nutzt einen Wirbelstromeffekt aus. Dabei wird beispielsweise ein metallisches Target über Sensorspulen bewegt, die mit einer Wechselspannung versorgt werden und in dem Target einen Wirbelstrom induzieren. Dies führt zur Reduzierung der Induktivitäten der Sensorspulen und erlaubt, über eine Frequenzänderung auf den Drehwinkel zu schließen. Beispielsweise sind die Spulen Bestandteil eines Schwingkreises, dessen Resonanzfrequenz sich bei einer Veränderung der Induktivität verschiebt. Dieser Typ von Drehwinkelsensor kann jedoch eine hohe Querempfindlichkeit gegenüber Einbautoleranzen (vor allem ein Verkippen des Targets) aufweisen. Auch kann die erzeugte Frequenz durch externe elektromagnetische Felder gestört werden (Injection Locking), da üblicherweise mit Frequenzen im Bereich von einigen zehn MHz gearbeitet wird.

Die EP 0 909 955 B1 zeigt einen Drehwinkelsensor mit auf einem Target kurzgeschlossene planare Leiterschleifen, die mit dem elektromagnetischen Wechselfeld einer Erregerspule wechselwirken.

Aus der EP 2 570 776 A2 sind ein induktiver Messgeber und ein Digitalmikrometer bekannt.

Aus der US 6 534 970 B1 sind ein Drehwinkelsensor und ein Signalgeber für einen Drehwinkelsensor bekannt.

Aus der DE 197 38 836 A1 ist ein induktiver Winkelsensor bekannt.

Aus der US 2014 / 0225600 A1 ist ein induktiver Positionssensor bekannt.

### Offenbarung der Erfindung

### Vorteile der Erfindung

Ausführungsformen der vorliegenden Erfindung können in vorteilhafter Weise ermöglichen, einen Drehwinkelsensor bereitzustellen, der besonders ökonomisch herzustellen ist, wobei er einfach auszuwertende Messsignale liefert.

Diese Aufgabe wird erfindungsgemäß durch die Merkmale des Anspruchs 1 gelöst.

Ideen zu Ausführungsformen der vorliegenden Erfindung können unter anderem als auf den nachfolgend beschriebenen Gedanken und Erkenntnissen beruhend angesehen werden.

Die Erfindung betrifft einen Drehwinkelsensor, der insbesondere in einer Umgebung mit hohen elektromagnetischen Störfeldern eingesetzt werden kann. Beispielsweise kann der Drehwinkelsensor im Motorraum oder in der Nähe des Motorraums eines Fahrzeugs verwendet werden, beispielsweise zur Bestimmung einer Position einer Drosselklappe, einer Rotorposition eines BLDC-Motors, einer Position eines Fahrpedals oder einer Position einer Nockenwelle. Der im Folgenden beschriebene Drehwinkelsensor ist kostengünstig, benötigt einen geringen Bauraum und basiert auf einem einfachen Messprinzip.

Gemäß einer Ausführungsform der Erfindung umfasst der Drehwinkelsensor ein Statorelement mit einer Statorsendespule und wenigstens zwei zueinander winkelversetzten, gleichartig aufgebauten Statorempfangsspulen, die auf einer Stator-Leiterplatte angeordnet sind und die innerhalb der Statorsendespule angeordnet sind, und ein bezüglich des Statorelements um eine Drehachse drehbar gelagertes Rotorelement, über das die Statorsendespule mit den wenigstens zwei Statorempfangsspulen induktiv gekoppelt ist, so dass die induktive Kopplung von einem Drehwinkel zwischen dem Statorelement und dem Rotorelement abhängig ist und die Statorsendespule in den wenigstens zwei Statorempfangsspulen wenigstens zwei winkelabhängige Wechselspannungen induziert.

Die Statorsendespule kann mit einer Wechselspannung beaufschlagt werden, so dass in den wenigstens zwei Statorempfangsspulen jeweils eine winkelabhängige Wechselspannung induziert wird, die von einem Drehwinkel zwischen dem Rotorelement und dem Statorelement abhängig ist. Dazu ist die induktive Kopplung zwischen der Statorsendespule und/oder den wenigstens zwei Statorempfangsspulen und dem Rotorelement von dem Drehwinkel abhängig. Dies kann beispielsweise dadurch erreicht werden, dass das Rotorelement metallische Induktionselemente aufweist, die mit dem Rotorelement drehbar sind und die die Statorempfangsspulen teilweise überdecken können. Auch ist möglich, dass auf dem Rotorelement weitere Spulen angeordnet sind, die mit der Statorsendespule und/oder den wenigstens zwei Statorempfangsspulen koppeln.

Insbesondere kann die Amplitude der jeweiligen induzierten Wechselspannung vom Drehwinkel abhängig sein. Die jeweilige induzierte Wechselspannung bzw. ihre Amplitude kann als ein Messsignal des Drehwinkelsensors aufgefasst werden, das von der jeweiligen Statorempfangsspule bereitgestellt wird.

Beispielsweise kann in der Statorsendespule eine sinusförmige Spannung (beispielsweise mit einer Frequenz von 5 MHz und einer Amplitude von 1.5 V) eingespeist. Durch ein bestimmtes Layout der Statorempfangsspulen (rechts- und linkslaufende Teilwindungen mit identisch großen umlaufenden Flächen) kann erreicht werden, dass ohne Rotorelement keine Spannung in den Statorempfangsspulen induziert wird. Der Kopplungsfaktor (Amplitudenverhältnis der Spannung in der Statorempfangsspule und der Spannung in einer Statorsendespule) ist Null. Diese Symmetrie wird durch das Vorhandensein des Rotorelements aufgebrochen und es entstehen Koppelfaktoren im Bereich -0.3 bis +0.3. Diese werden gemessen und lassen einen Rückschluss auf die Winkelstellung des Rotorelements zu.

Eine Spule kann dabei durch eine Mehrzahl von Leiterbahnen in oder auf der Leiterplatte definiert werden, die alle in Reihe geschaltet sind und die über Anschlüsse an der Leiterplatte gemeinsam bestromt werden können.

Gemäß einer Ausführungsform der Erfindung weist die Statorsendespule Spulen-Leiterbahnen in einer ersten Ebene und einer zweiten Ebene der Stator-Leiterplatte auf, wobei die Spulen-Leiterbahnen in einer ersten Ebene der Stator-Leiterplatte in einem Durchtrittsbereich unterbrochen sind und über Durchkontaktierungen mit Umleitungsbahnen auf der zweiten Ebene verbunden sind. Die Spulen-Leiterbahnen der Stator-Sendespule können zumindest abschnittsweise im Wesentlichen kreisförmig sein, wobei der Mittelpunkt der die Leiterbahnen definierenden Kreise mit einer Symmetrieachse des Statorelements im Wesentlichen übereinstimmen kann. Diese Symmetrieachse kann eine Achse sein, die bei exakter Ausrichtung des Statorelements mit dem Rotorelement mit der Drehachse des Rotorelements übereinstimmt.

Die beiden Ebenen der Stator-Leiterplatte können die beiden Seiten der Stator-Leiterplatte sein. Es ist zu verstehen, dass die Stator-Leiterplatte aber auch weitere Ebenen aufweisen kann (also eine mehrschichtige Leiterplatte sein kann), in der andere Leiterbahnen des Drehwinkelsensors (beispielsweise die einer Auswerteeinheit zum Auswerten der Messsignale) ausgebildet sein können.

Der Durchtrittsbereich kann ein Bereich in Umfangsrichtung der Statorsendespule sein, der einen Öffnungswinkel von weniger als 90°, beispielweise weniger als 45°, aufweist. In dem Durchtrittsbereich verlaufen in der ersten Ebene keine Leiterbahnen der Statorsendespule. Vielmehr werden die Spulen-Leiterbahnen in Umfangsrichtung betrachtet außerhalb des Durchtrittsbereichs (also an den beiden Seiten des Durchtrittsbereichs) zu Durchkontaktierungen geführt und dort in die zweite Ebene umgeleitet. In der zweiten Ebene befinden sich Umleitungsbahnen, die im Wesentlichen parallel zu den Spulen-Leiterbahnen der Statorsendespule verlaufen können und die Durchkontaktierungen für Spulen-Leiterbahnen auf verschiedenen Seiten des Durchtrittsbereichs verbinden. Die Umleitungsbahnen und/oder die Durchkontaktierungen können im Außenbereich eines ringförmigen Bereichs angeordnet sein, in dem die Statorempfangsspulen angeordnet sind. Die Umleitungsbahnen können zumindest abschnittsweise im Wesentlichen parallel zu den Spulen-Leiterbahnen in der zweiten Ebene verlaufen.

Mit dem Durchtrittsbereich ist eine Öffnung in der Statorsendespule geschaffen, durch den Anschlussleiter für die wenigstens zwei Statorempfangsspulen aus dem Inneren der Statorsendespule z.B. in radialer Richtung herausgeführt werden können.

Gemäß einer Ausführungsform der Erfindung sind in der ersten Ebene Anschlussleiter der Statorempfangsspulen von Statorempfangsspulen-Anschlüssen innerhalb der Statorsendespule durch den Durchtrittsbereich zu Leiterplatten-Anschlüssen für die Statorempfangsspulen geführt. Es ist zu verstehen, dass die Spulen-Leiterbahnen der Statorsendespule in einem ringförmigen Bereich um die Symmetrieachse angeordnet sein können. Der Bereich radial betrachtet innerhalb dieses ringförmigen Bereichs kann als Innenbereich der Statorsendespule aufgefasst werden. Die Statorempfangsspulen und deren Anschlüsse können sich in dem Innenbereich, d.h. innerhalb der Statorsendespule, befinden. Der Bereich radial betrachtet außerhalb des ringförmigen Bereichs kann als Außenbereich der Statorsendespule aufgefasst werden. Die Leiterplatten-Anschlüsse können in dem Außenbereich, d.h. außerhalb der Statorsendespule, angeordnet sein.

Insgesamt ist es auf diese Weise möglich, die Statorsendespule und die Statorempfangsspulen in lediglich zwei Ebenen der Stator-Leiterplatte anzuordnen. Somit ist eine besonders kostengünstige Fertigung des Statorelements möglich.

Gemäß einer Ausführungsform der Erfindung ist ein Anschlussleiter einer Statorempfangsspule zu einer Leiterschleife gekrümmt, um unterschiedlich große Spulenflächen der Statorempfangsspulen, die durch unterschiedlich lange Anschlussleiter innerhalb der Statorsendespule erzeugt sind, auszugleichen.

Um möglichst gleichartige Messsignale zu erhalten, sollten die Statorempfangsspulen möglichst gleichartig aufgebaut sein. Da der Durchtrittsbereich möglichst schmal sein sollte, werden zumindest bei einer der Statorempfangsspulen die Anschlussleiter innerhalb der Statorsendespule zu dem Durchtrittsbereich geführt, was zu einer zusätzlichen Spulenfläche für diese Statorempfangsspule führt. Dies führt auch dazu, dass diese Statorempfangsspule (über das Rotorelement) stärker mit der Statorsendespule koppeln würde. Aus diesem Grund wird eine weitere mit dieser Statorempfangsspule verbundene Leiterschleife vorgesehen, die derart mit der Statorsendespule koppelt, dass die zusätzliche durch die Anschlussleiter verursachte Spulenfläche wieder ausgeglichen wird.

Prinzipiell ist das Feld der Sendespule in ihrem inneren entgegengesetzt zum Feld außerhalb und betragsmäßig größer. Um also eine induzierte Spannung im Inneren zu kompensieren, bedarf es außen einer deutlich größeren Fläche.

Mit anderen Worten sollte der durch die Leiterschleife induzierte Strom von der Amplitude genauso groß sein wie der in der zusätzlichen Spulenfläche (bzw. im Anschlussleiter) induzierte Strom, bloß unterschiedliches Vorzeichen aufweisen.

Die Leiterschleife kann dabei zumindest teilweise außerhalb der Statorsendespule angeordnet sein, wo die Statorsendespule ein elektromagnetisches Feld erzeugt, das dem Feld innerhalb der Statorsendespule entgegengesetzt ist.

Eine Leiterschleife kann dabei als eine oder mehrere Leiterbahnen auf der Stator-Leiterplatte ausgebildet sein, die zusammen mit anderen Leiterbahnen der gleichen Spule (d.h. in diesem Fall der Statorempfangsspule) Spulenflächen aufspannen.

Gemäß einer Ausführungsform der Erfindung ist die Leiterschleife durch einen Anschlussleiter gebildet, der innerhalb der Statorsendespule in einer bzw. eine Umfangsrichtung auf den Durchtrittsbereich zu verläuft und der außerhalb der Statorsendespule in eine entgegengesetzte Richtung verläuft. Grundsätzlich kann die Statorempfangsspule über zwei Anschlussleiter mit den Leiterplatten-Anschlüssen verbunden sein. Innerhalb der Statorsendespule können die beiden Anschlussleiter von einem Statorempfangsspulen-Anschluss in einer ersten Umfangsrichtung zu dem Durchtrittsbereich verlaufen und dann anschließend außerhalb der Statorsendespule unterschiedlichen Wegen folgen, d.h. sich außerhalb der Statorsendespule voneinander entfernen. Der erste Anschlussleiter kann zu der Leiterschleife gekrümmt sein, die zumindest abschnittsweise in einer zweiten Umfangsrichtung entgegengesetzt zu der ersten Umfangsrichtung verläuft. Auf diese Weise kann die Leiterschleife mit dem ersten Anschlussleiter innerhalb der Statorsendespule eine erste Spulenfläche bilden und außerhalb der Statorsendespule mit dem zweiten Anschlussleiter eine weitere Spulenfläche bilden, die zusammen eine Offsetspannung kompensieren können, die durch die Asymmetrie der Anschlussleiter innerhalb der Statorsendespule erzeugt wird.

Gemäß einer Ausführungsform der Erfindung vergrößert die Leiterschleife ausgehend von dem Durchtrittsbereich in einem ersten Bereich ihren radialen Abstand zu der Statorsendespule und verkleinert in einem anschließenden zweiten Bereich, mit dem die Leiterschleife mit einem Leiterplatten-Anschluss verbunden ist, ihren radialen Abstand zu der Statorsendespule. Die Leiterschleife kann dadurch realisiert werden, dass einer der beiden Anschlussleiter für die Statorempfangsspule sich zunächst von der Statorsendespule entfernt (d.h. in radialer Richtung einen immer größer werdenden Abstand zu der Statorsendespule aufweist) und sich anschließend der Statorsendespule wieder nähert (d.h. einen wieder kleiner werdenden radialen Abstand zu der Statorsendespule aufweist). Anschließend kann der Anschlussleiter mit zunehmendem radialen Abstand von der Statorsendespule auf den zugehörigen Leiterplatten-Anschluss hin verlaufen.

Auch der andere, zweite Anschlussleiter der Statorempfangsspule kann außerhalb der Statorsendespule mit zunehmendem radialen Abstand von der Statorsendespule auf den zugehörigen Leiterplatten-Anschluss hin verlaufen.

Gemäß einer Ausführungsform der Erfindung sind Durchkontaktierungen für die Umleitungsbahnen radial innerhalb der Leiterschleife angeordnet. Insbesondere kann die Hälfte der Durchkontaktierungen auf einer Seite des Durchtrittsbereichs bzw. an einem Ende des Durchtrittsbereichs in Umfangsrichtung radial innerhalb der Leiterschleife angeordnet sein. Der Durchtrittsbereich weist dabei zwei einander in Umfangsrichtung gegenüberliegende Seiten bzw., Enden auf.

Gemäß einer Ausführungsform der Erfindung verlaufen die beiden Anschlussleiter einer Statorempfangsspule von den zugehörigen Statorempfangsspulen-Anschlüssen durch den Durchtrittsbereich parallel. Auf diese Weise kann die von ihnen umschlossene Fläche, die zu der Fläche der jeweiligen Empfangsspule beiträgt, klein gehalten werden.

Gemäß einer Ausführungsform der Erfindung verlaufen die Umleitungsbahnen radial außerhalb der Spulen-Leiterbahnen der Statorsendespule in der zweiten Ebene. Die Umleitungsbahnen können somit im Außenbereich außerhalb der Spulen-Leiterbahnen angeordnet sein, so dass der gesamte Innenbereich für die Statorempfangsspulen zur Verfügung steht. Dadurch kann vorteilhaft das Messsignal vergrößert werden, denn je mehr Empfangsfläche vorhanden ist, desto größer ist das Messsignal.

Gemäß einer Ausführungsform der Erfindung weist jede der Statorempfangsspulen wenigstens zwei gegenläufige Teilwindungen auf. Eine Teilwindung kann dabei ein Teil einer Spule sein, der Leiter umfasst, die z.B. alle die gleiche Fläche umlaufen und/oder die miteinander in Reihe geschaltet sind. Zwei Teilwindungen einer Spule sind dann gegenläufig bzw. gegenläufig orientiert, wenn sie bei einem Stromfluss durch die Spule jeweils im Uhrzeigersinn und gegen den Uhrzeigersinn von Strom durchflossen werden. Durch gegenläufige Teilwindungen mit insgesamt gleich großer Fläche kann erreicht werden, dass in den Statorempfangsspulen kein Strom direkt durch die Statorsendespule induziert wird (sondern nur indirekt über das Rotorelement). Weiter kann ein im Wesentlichen homogenes elektromagnetisches Störfeld in der Statorempfangsspule keinen Strom induzieren.

Gemäß einer Ausführungsform der Erfindung ist jede der Statorempfangsspulen aus Leiterbahnen in zwei Ebenen der Leiterplatte aufgebaut. Insbesondere können die Statorempfangsspulen in den beiden gleichen Ebenen wie die Statorsendespule aufgebaut sein.

Gemäß einer Ausführungsform der Erfindung überkreuzen sich Leiterbahnen zweier Statorempfangsspulen, die in unterschiedlichen Ebenen angeordnet sind. Jede der Statorempfangsspulen kann so aufgebaut sein, dass sie die Fläche im Innenbereich der Statorsendespule nahezu vollständig (beispielsweise zu mehr als 90%) überdeckt. Die Statorempfangsspulen können zueinander verdreht sein, um so unterschiedliche Messsignale zu erzeugen. Dabei können sie so aufgebaut sein, dass sie sich lediglich an Kreuzungspunkten in unterschiedlichen Ebenen überkreuzen.

Gemäß einer Ausführungsform der Erfindung weist das Rotorelement eine Rotorempfangsspule und eine Rotorsendespule auf, die miteinander elektrisch verbunden sind, wobei die Rotorempfangsspule mit der Statorsendespule induktiv gekoppelt ist, so dass ein durch die Statorsendespule erzeugtes elektromagnetisches Feld in der Rotorempfangsspule einen Strom induziert, der durch die Rotorsendespule fließt, so dass die Rotorsendespule ein weiteres elektromagnetisches Feld erzeugt, wobei die wenigstens zwei Statorempfangsspulen mit der Rotorsendespule induktiv gekoppelt sind, so dass die induktive Kopplung von einem Drehwinkel zwischen dem Statorelement und dem Rotorelement abhängig ist, und das von der Rotorsendespule erzeugte weitere elektromagnetische Feld in den wenigstens zwei Statorempfangsspulen wenigstens zwei winkelabhängige Wechselspannungen induziert.

Mit anderen Worten kann die Statorsendespule mit einer Wechselspannung beaufschlagt werden, die über eine induktive Kopplung der Statorsendespule mit der Rotorempfangspule in der Rotorempfangsspule eine weitere Wechselspannung induziert. Die in der Rotorempfangsspule erzeugte Wechselspannung erzeugt einen Stromfluss in der Rotorsendespule, der über eine induktive Kopplung der Rotorsendespule mit den Statorempfangsspulen in den Statorempfangsspulen jeweils eine weitere Wechselspannung erzeugt, die gemessen werden kann und aus deren Messwerten ein relativer Drehwinkel zwischen dem Statorelement und dem Rotorelement ermittelt werden kann.

Gemäß einer Ausführungsform der Erfindung ist die Rotorsendespule in wenigstens zwei Teilwindungen aufgeteilt, die gegenläufig orientiert sind. Auf diese Weise wird von der Statorsendespule kein Strom oder zumindest nur ein geringer Strom in der Rotorsendespule induziert.

Gemäß einer Ausführungsform der Erfindung sind die Teilwindungen der Rotorsendespule sichelförmig ausgebildet. Sichelförmige Teilwindungen können durch bogenförmige Leiterabschnitte mit unterschiedlicher Krümmung, die beide in die gleiche Richtung gekrümmt sind, begrenzt sein. Insbesondere können die bogenförmigen Leiterabschnitte kreisbogenförmig sein und/oder verschiedene Radien aufweisen. Auf diese Weise ist die Amplitude der in einer Statorempfangsspule induzierten Wechselspannung über eine Sinusfunktion vom Drehwinkel abhängig. Ein vom Drehwinkel abhängiges sinusförmiges Signal kann leicht ausgewertet und in den Drehwinkel umgerechnet werden.

Beispielsweise kann bei zwei Statorempfangsspulen (einem Zweiphasensystem) aus dem Quotienten der beiden Signale der Drehwinkel mittels Arkustangens bestimmt werden. Bei drei Statorempfangsspulen (einem Dreiphasensystem) kann der Drehwinkel mittels einer Clarke-Transformation der drei Signale bestimmt werden.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt schematisch einen Querschnitt durch einen Drehwinkelsensor gemäß einer Ausführungsform der Erfindung.
Fig. 2 zeigt schematisch eine Draufsicht auf ein Statorelement für einen Drehwinkelsensor gemäß einer Ausführungsform der Erfindung.
Fig. 3 zeigt schematisch die Geometrie einer Statorempfangsspule eines Drehwinkelsensors gemäß einer Ausführungsform der Erfindung.
Fig. 4 zeigt ein Spulenlayout für eine Statorempfangsspule eines Drehwinkelsensors gemäß einer Ausführungsform der Erfindung.
Fig. 5 zeigt schematisch eine Draufsicht auf ein Rotorelement für einen Drehwinkelsensor gemäß einer Ausführungsform der Erfindung.
Fig. 6 zeigt schematisch einen Durchtrittsbereich eines Statorelements für einen Drehwinkelsensor gemäß einer Ausführungsform der Erfindung.
Fig. 7 zeigt einen vergrößerten Ausschnitt aus der Fig. 6.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

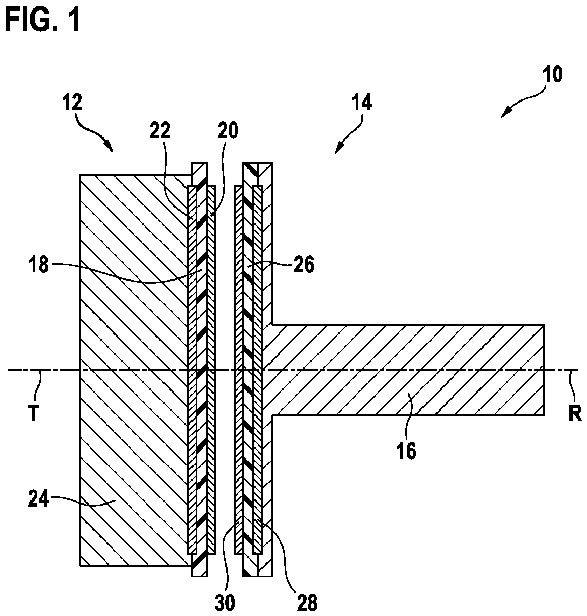

Fig. 1 zeigt einen Drehwinkelsensor 10 aus einem Statorelement 12 und einem Rotorelement 14. Das Rotorelement 14 kann auf einer Welle 16 eines Bauteils, wie etwa einer Drosselklappe, einem Motor, einer Nockenwelle, eines Fahrpedals usw., befestigt sein oder von dieser Welle 16 bereitgestellt werden. Die Welle 16 ist um die Drehachse D drehbar und das Statorelement 12 liegt dem Rotorelement 14 in der entsprechenden axialen Richtung gegenüber. Beispielsweise ist das Statorelement 12 an einem Gehäuse des Bauteils befestigt. Wenn das Statorelement 12 gegenüber der Welle 16 exakt ausgerichtet ist, stimmt die Symmetrieachse T des Statorelements 12 mit der Drehachse R überein.

Das Statorelement 12 umfasst eine Stator-Leiterplatte 18, auf der eine Statorsendespule 20 und eine Mehrzahl von Statorempfangsspulen 22 angeordnet sind. Die Leiter der Spulen 20, 22 können lediglich in zwei Ebenen, beispielsweise auf den beiden Seiten der Stator-Leiterplatte 18, angeordnet sein. Auf der Stator-Leiterplatte 18 können sich weitere Bauelemente für eine Steuereinheit 24 befinden. Die Steuereinheit 24 kann die Statorsendespule 20 mit einer Wechselspannung (beispielsweise mit einer Frequenz zwischen 1 MHz und 20 MHz, beispielsweise 5 MHz, und/oder mit einer Spannungsamplitude im Bereich von 0,5 V bis 10 V, beispielsweise 1,5 V) versorgen und in jeder Statorempfangsspule 22 eine induzierte Wechselspannung ermitteln. Basierend auf diesen Messungen kann die Steuereinheit 24 einen relativen Drehwinkel zwischen dem Statorelement 12 und dem Rotorelement 14 bestimmen.

Das Rotorelement 14 umfasst eine Rotor-Leiterplatte 26. Auf der Rotor-Leiterplatte 26 sind eine Rotorempfangsspule 28 und eine Rotorsendespule 30 angeordnet. Die Leiter der Spulen 28, 30 können in lediglich zwei Ebenen der Rotor-Leiterplatte 26, beispielsweise auf den beiden Seiten der Rotor-Leiterplatte 26, angeordnet sein.

Alle Spulen 20, 22, 28, 30 sind als Planarspulen ausgeführt, d.h. als Spulen, die mittels Leiterbahnen auf und/oder in einer der Leiterplatten 18, 26 ausgeführt sind.

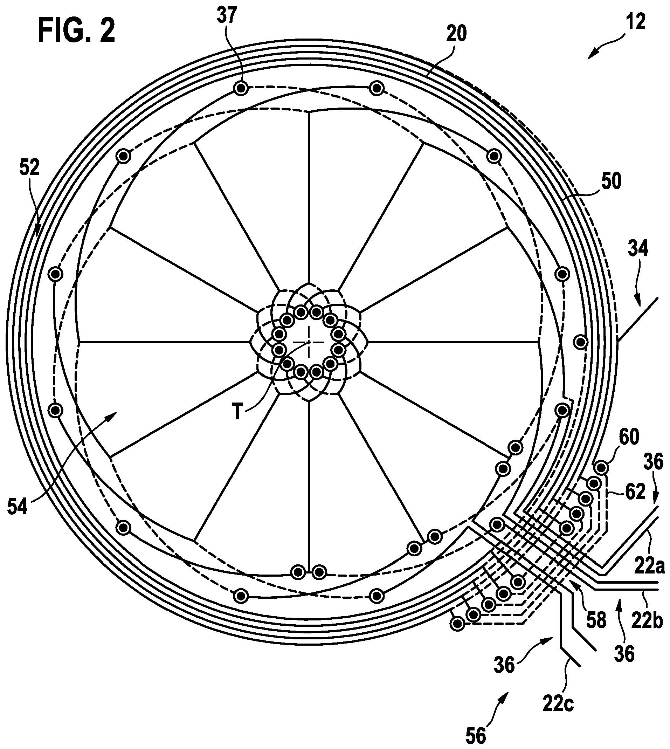

Fig. 2 zeigt das Spulenlayout eines Statorelements 12 in Draufsicht. In Fig. 2 und in den folgenden Figuren werden Leiterbahnen in einer ersten Ebene einer Leiterplatte 18, 26 durchgezogen und die in einer zweiten Ebene gestrichelt dargestellt.

Die Statorsendespule 20 ist in einer ersten und zweiten Ebene der Stator-Leiterplatte 18 angeordnet und umfasst mehrere umlaufende, nahezu kreisförmige Spulen-Leiterbahnen 50, die alle um die Symmetrieachse T verlaufen, die (bei korrekter Ausrichtung des Statorelements 12 und des Rotorelements 14 ohne Versatz) mit der Drehachse R des Drehwinkelsensors übereinstimmt. Der Außendurchmesser der Statorsendespule 20 kann zwischen 10 mm und 40 mm, beispielsweise 25 mm, betragen.

Innerhalb der Statorsendespule 20 sind drei Statorempfangsspulen, eine erste Statorempfangsspule 22a, eine zweite Statorempfangsspule 22b und eine dritte Statorempfangsspule 22c angeordnet, die (bis auf ihre Anschlüsse 36) gleichartig aufgebaut und um 120° zueinander verdreht sind. Die Statorempfangsspulen 22a, 22b, 22c sind lediglich in der ersten und der zweiten Ebene der Stator-Leiterplatte 18 angeordnet. Dabei werden sie über Anschlüsse 36 in der ersten Ebene kontaktiert und verlaufen dann abwechselnd in der zweiten und ersten Ebene, wobei ein Ebenenwechsel mittels einer Durchkontaktierung 37 realisiert wird. Die Durchkontaktierung 37, auch als Via bezeichnet, ist radial betrachtet innerhalb der Statorsendespule 20 angeordnet.

Die Spulen-Leiterbahnen 50 der Statorsendespule sind in einem ringförmigen Bereich 52 um die Symmetrieachse T angeordnet, in dessen Innenbereich 54 die Statorempfangsspulen 22a, 22b, 22c angeordnet sind und in dessen Außenbereich 56 die Anschlüsse 34, 36 verlaufen. Die Spulen-Leiterbahnen 50 der Statorsendespule 20 in der zweiten Ebene bilden eine Spirale. Die Spulen-Leiterbahnen 50 in der ersten Ebene sind unterbrochen, so dass ein Durchtrittsbereich 58 in dem ringförmigen Bereich 52 gebildet ist, durch den die Anschlüsse 36 der Statorempfangsspulen 22a, 22b, 22c die Statorsendespule 20 verlassen können. Dadurch können alle Spulen 20, 22a, 22b, 22c in lediglich zwei Ebenen der Stator-Leiterplatte 18 ausgebildet werden.

Die Leiterbahnen 50 der Statorsendespule 20 in der ersten Ebene knicken benachbart des Durchtrittsbereichs 58 nach außen (in Richtung des Außenbereichs 56) ab und enden an Durchkontaktierungen 60 im Außenbereich, die entlang eines Kreises um die Symmetrieachse T angeordnet sind. Die Durchkontaktierungen 60 auf beiden Seiten bzw. Enden des Durchtrittsbereichs 58 (in Umfangsrichtung betrachtet) sind mittels Umleitungsbahnen 62 in der zweiten Ebene miteinander verbunden, so dass die Leiterbahnen 50 in der ersten Ebene elektrisch miteinander verbunden werden und die Statorsendespule 20 elektrisch gesehen nicht unterbrochen ist.

Die Umleitungsbahnen 62 und/oder die Durchkontaktierungen 60 sind im Außenbereich 56 des ringförmigen Bereichs 52 angeordnet. Die Umleitungsbahnen 62 verlaufen zumindest abschnittsweise im Wesentlichen parallel zu den Spulen-Leiterbahnen 50 in der zweiten Ebene.

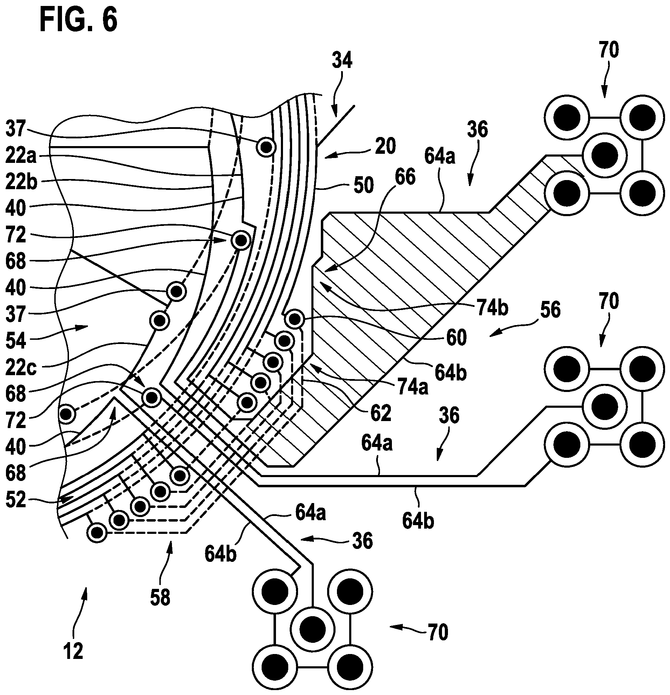

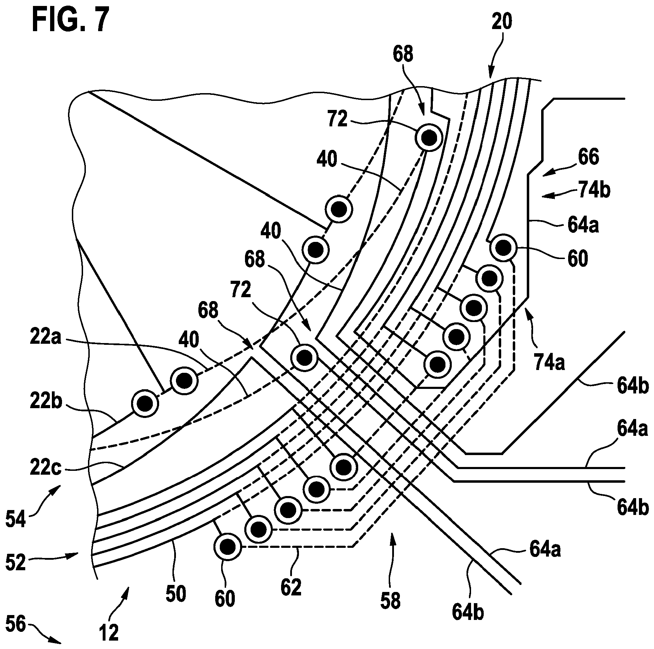

Der Bereich des Statorelements 12 in der Umgebung des Durchtrittsbereichs 58 wird in Bezug auf die Fig. 6 und 7 noch einmal detaillierter beschrieben.

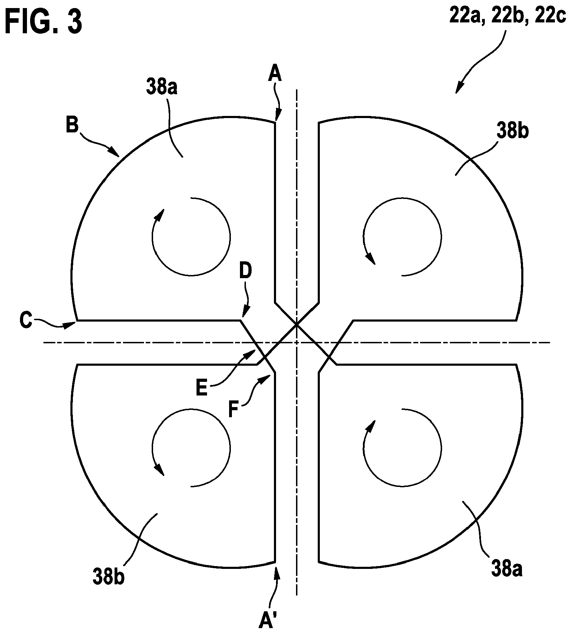

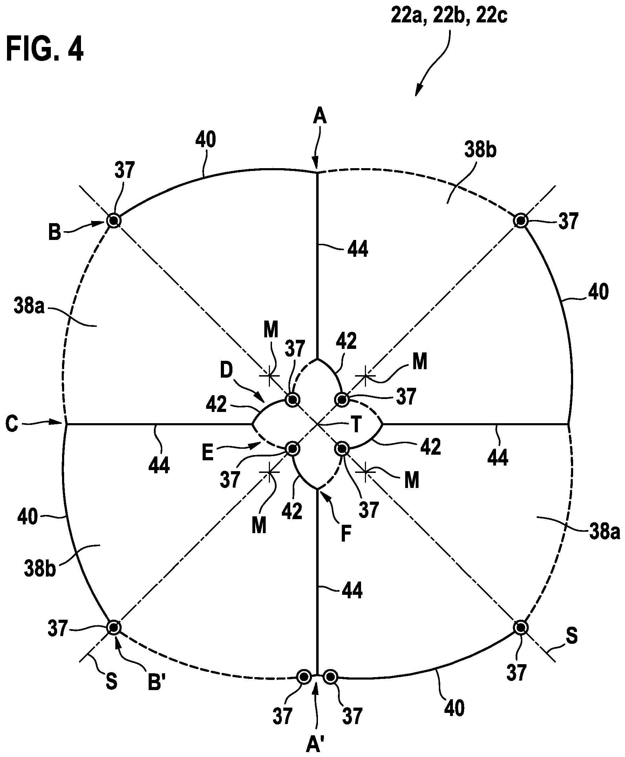

Die Fig. 3 zeigt die Geometrie einer einzelnen der drei Statorempfangsspulen 22a, 22b, 22c schematisch, z.B. das Spulenlayout der ersten Statorempfangsspule 22a, während die Fig. 4 das Spulenlayout einer einzelnen der drei Statorempfangsspulen 22a, 22b, 22c zeigt.

Aus Gründen der Übersichtlichkeit sind in den Fig. 3 und 4 die Anschlüsse 36 weggelassen. Weiter ist zu erwähnen, dass Fig. 3 lediglich die Form, aber nicht den genauen Verlauf der Leiterbahnen einer Statorempfangsspule 22a, 22b, 22c zeigt, während sich in der Fig. 4 Teile der Leiterbahnen überdecken.

Wie aus den Fig. 3 und 4 hervorgeht, weist jede der Statorempfangsspulen 22a, 22b, 22c vier Teilwindungen 38a, 38b auf, die im Wesentlichen eine Kreisfläche überdecken (d.h. den Innenbereich 54), die die Kreisfläche in vier gleich große Flächen aufteilen und/oder die symmetrisch zu der Spiegelsymmetrieachse S sind. Zwei bezüglich der Symmetrieachse T gegenüberliegende Teilwindungen 38a sind in eine erste Richtung orientiert, die beiden anderen Teilwindungen 38b sind in die entgegengesetzte Richtung, d.h. gegenläufig, orientiert.

Im Allgemeinen gilt, dass jede Statorempfangsspule 22a, 22b, 22c eine geradzahlige Anzahl 2m an Teilwindungen 38a, 38b aufweisen kann, und dass der Messbereich *Per* des Drehwinkelsensors 10, der beispielsweise ein ganzteiliger Teiler von 360° sein kann, von der Anzahl 2m der Teilwindungen 38a, 38b jeder Statorempfangsspule 22a, 22b, 22c abhängt, wobei m=360°/Per gilt.

Beispielsweise weisen die Statorempfangsspulen 22a, 22b, 22c aus den Fig. 2 bis 4 vier Teilwindungen 38a, 38b auf. Dies entspricht m=2 und führt zu einer Periodizität von 180°: *Per* = 360°/m = 360°/2 = 180°.

Die gleiche Anzahl an in die eine Richtung und an in die andere Richtung orientierten Teilwindungen 38a, 38b führt dazu, dass sich die durch die Statorsendespule 20 induzierten Teilspannungen (bei fehlendem Rotorelement 14) in Summe kompensieren und als Ausgangssignal 0 V an allen Statorempfangsspulen 22a, 22b, 22c ausgegeben wird. Diese kann auch zur Eigendiagnose verwendet werden, wobei erkannt werden kann, dass das Rotorelement 14 fehlt oder zumindest eine elektrische Unterbrechung aufweist. Außerdem induzieren Störungen infolge von EMV-Einflüssen in jeder Teilwindung 38a, 38b Spannungen unterschiedlichen Vorzeichens, die sich durch die Reihenschaltung der Teilwindung 38a, 38b wieder kompensieren.

In dem Statorelement 12 sind die drei Statorempfangsspulen 22a, 22b, 22c zueinander um einen Winkel ξ verdreht, der sich gemäß ξ *=Per* / 3 berechnen lässt (hier beispielsweise 60°: ξ =180° / 3 = 60°). Bei dieser Verdrehung ergibt sich ein dreiphasiges elektrisches System, welches einen elektrischen Phasenversatz von 120° aufweist. Bei einem Zweiphasensystem (90° elektrischer Phasenversatz) müssen die Spulen um ξ =*Per* / 4 verdreht werden.

Wie aus der Fig. 4 hervorgeht, ist jede der Teilwindungen 38a, 38b von einem radial außen liegenden Umfangsleiter 40 und einem radial innen liegenden Umfangsleiter 42 begrenzt, die jeweils von zwei Radialleitern 44 miteinander verbunden werden. In der Fig. 4 sind für jeden Quadranten (Teilwindungen 38a, 38b) lediglich zwei der vier Radialleiter 44 zu erkennen, da jeweils zwei Radialleiter 44 sich überdeckend übereinander in den beiden Ebenen der Stator-Leiterplatte 18 verlaufen. Insgesamt sind in dem Ausführungsbeispiel der Figur 4 also acht Radialleiter 44 vorhanden, die in zwei Ebenen übereinander liegen. Zu erkennen sind in Fig. 4 somit nur 4 Radialleiter 44. Der Umfangsleiter 40 kann sich dabei zwischen zwei Radialleitern 44 erstrecken. Der Umfangsleiter 40 kann dabei aus zwei Segmenten bzw. Abschnitten zusammengesetzt sein, die bezüglich der Symmetrieachse T auch einen Radialanteil aufweisen können. Die Umfangsleiter 40 sind bevorzugt Kreisbahnabschnitte, wobei der Mittelpunkt der zugeordneten Kreise nicht mit der Symmetrieachse T zusammenfällt.

Der äußere Umfangsleiter 40 der ersten Teilwindung 38a startet am Punkt A (auch in der Fig. 3 dargestellt) und verläuft dann in der ersten Ebene bis zum Punkt B in seiner Mitte, wo er bei einer weiteren Durchkontaktierung 37 die Ebene wechselt. Anschließend verläuft er in der zweiten Ebene bis zum Punkt C. Am Punkt C ist der äußere Umfangsleiter 40, der hier in der zweiten Ebene verläuft, mit einem Radialleiter 44 verbunden, der in der zweiten Ebene bis zum Punkt D verläuft und dort in den inneren Umfangsleiter 42 der zweiten Teilwindung 38b übergeht.

Der innere Umfangsleiter 42 der zweiten Teilwindung 38b verläuft vom Punkt D bis zum Punkt E in der zweiten Ebene, wechselt am Punkt F über eine Durchkontaktierung 37 in die erste Ebene und verläuft dann in der ersten Ebene bis zum Punkt F, wo er in einen weiteren Radialleiter 44 übergeht. Der innere Umfangsleiter 42 kann dabei aus zwei Segmenten bzw. Abschnitten zusammengesetzt sein, die bezüglich der Symmetrieachse T auch einen Radialanteil aufweisen können. Die inneren Umfangsleiter 42 sind bevorzugt Kreisbahnabschnitte, wobei der Mittelpunkt der zugeordneten Kreise nicht mit der Symmetrieachse T zusammenfällt.

Vom Punkt F aus verläuft der weitere Radialleiter 44 der zweiten Teilwindung 38a dann bis zum Punkt A', an dem der äußere Umfangsleiter 40 der zweiten Teilwindung 38b beginnt. Am Punkt A' befindet sich eine Durchkontaktierung 37, bei der zu dem äußeren Umfangsleiter 40 der zweiten Teilwindung 38b in der zweiten Ebene gewechselt wird. Bei der zweiten Teilwindung 38b folgen nun die Wechsel zwischen der ersten Ebene und der zweiten Ebene umgekehrt zu der ersten Teilwindung 38a beim Punkt B'. Zwischen den Punkten B' und C verläuft der äußere Umfangsleiter 40 in der ersten Ebene. Im Punkt C geht die zweite Teilwindung 38b wieder in einen Radialleiter 44 über und verläuft mit einem Ebenenwechsel von Punkt D zu A. Beim Punkt A schließen sich die rechten Teilwindungen an.

Die äußeren Umfangsleiter 40 verlaufen auf Kreisen, deren Mittelpunkte derart von der Symmetrieachse T verschoben sind, dass die Punkte B, bei denen eine Durchkontaktierung 37 vorhanden ist, maximalen radialen Abstand haben. Die inneren Umfangsleiter 42 verlaufen rechts und links der jeweiligen Durchkontaktierung auch auf Kreisen, deren Mittelpunkte von der Symmetrieachse T verschoben sind, jedoch so, dass die jeweilige Durchkontaktierung minimalen radialen Abstand haben.

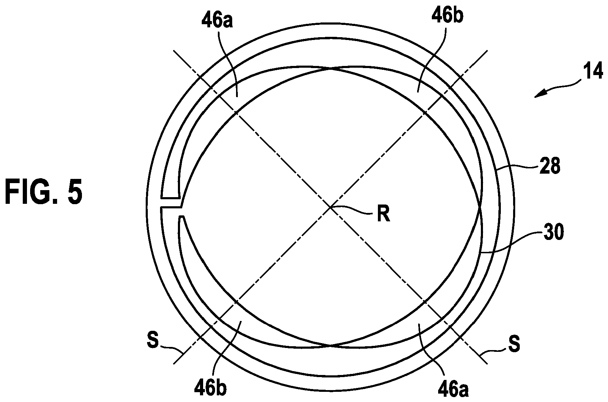

Die Fig. 5 zeigt ein Rotorelement 14 für den Drehwinkelsensor 10 aus der Fig. 1 in Draufsicht, das eine Rotorempfangsspule 28 und eine Rotorsendespule 30 umfasst und das zusammen mit dem Statorelement 12 aus den Fig. 2 bis 4 verwendet werden kann.

Die Rotorempfangsspule 28 ist im Wesentlichen kreisförmig, wobei die Drehachse R den Mittelpunkt der Rotorempfangsspule 28 darstellt. In radialer Richtung betrachtet, befindet sich die Rotorsendespule 30 innerhalb der Rotorempfangsspule 28. Die Rotorempfangsspule 28 und die Rotorsendespule 30 sind mit ihren Enden elektrisch miteinander verbunden bzw. in Reihe geschaltet. Die Rotorempfangsspule 28 kann die gleiche Fläche wie die Statorsendespule 20 umlaufen und/oder mit dieser in Bezug auf die Drehachse R fluchten. Genauso wie die Statorsendespule 20 kann die Rotorempfangsspule 28 aus einer Mehrzahl von nahezu kreisförmigen Leiterbahnen aufgebaut sein.

Die Rotorsendespule 30 weist vier gegenläufige Teilwindungen 46a, 46b auf, die jeweils sichelförmig sind. Die bezüglich der Drehachse R gegenüberliegenden

Teilwindungen 46a bzw. 46b sind bezüglich des Stromflusses gleichläufig orientiert, während benachbarte Teilwindungen 46a, 46b gegenläufig orientiert sind. Die Geometrien der Teilwindungen 46a, 46b können identisch sein. Die Teilwindungen 46a, 46b sind in einem Innenbereich der Rotorempfangsspule 28 angeordnet. Die beiden sichelförmigen Teilwindungen 46a, 46b sind aus im Wesentlichen kreisbogenförmigen Leiterabschnitten gebildet.

Die Fig. 6 zeigt einen Ausschnitt aus einem Spulenlayout für ein Statorelement 12 analog der Fig. 2. Bei dem Statorelement 12 der Fig. 6 ist ein Anschlussleiter 64a einer ersten Statorempfangsspule 22a zu einer Leiterschleife 66 gekrümmt, um eine Asymmetrie in den Spulenflächen der Statorempfangsspulen auszugleichen. Diese Asymmetrie wird vor allem durch die unterschiedlichen Flächenanteile der von den zu den jeweiligen Spulen gehörigen Anschlussleitern 64a, 64b aufgespannten Flächen hervorgerufen.

Die beiden Anschlussleiter 64a, 64b jeder Statorempfangsspule 22a, 22b, 22c sind im Innenbereich 54 der Statorsendespule 20 über jeweils einen Statorempfangsspulen-Anschluss 68 mit der jeweiligen Statorempfangsspule 22a, 22b, 22c verbunden. Der Statorempfangsspulen-Anschluss 68 kann durch eine Unterbrechung eines äußeren Umfangsleiters 40 der jeweiligen Empfangsspule 22a, 22b, 22c realisiert sein. Die beiden Anschlussleiter 64a, 64b jeder Statorempfangsspule 22a, 22b, 22c verlaufen in der ersten Ebene der Leiterplatte 18 und können über eine Durchkontaktierung 72 bei dem jeweiligen Statorempfangsspulen-Anschluss 68 mit einer Leiterbahn der Statorempfangsspule 22a, 22b, 22c in der zweiten Ebene verbunden sein.

Die Anschlussleiter 64a, 64b jeder Statorempfangsspule 22a, 22b, 22c verlaufen im Wesentlichen parallel zueinander von dem jeweiligen Statorempfangsspulen-Anschluss 68 durch den Durchtrittsbereich 58 zu Leiterplatten-Anschlüssen 70 für die Statorempfangsspulen 22a, 22b, 22c. Da die Statorempfangsspulen-Anschlüsse 68 verschiedener Statorempfangsspulen 22a, 22b, 22c aufgrund des Spulenlayouts der Statorempfangsspulen 22a, 22b, 22c und der Durchkontaktierungen 72 unterschiedlich weit von dem Durchtrittsbereich 58 entfernt sind, verlaufen die Anschlussleiter 64a, 64b verschiedener Statorempfangsspulen 22a, 22b, 22c innerhalb der Statorsendespule 20 unterschiedlich weit.

Dadurch ergeben sich für jede der Statorempfangsspulen 22a, 22b, 22c unterschiedliche zusätzliche Flächen, in die Spannungen durch die Statorsendespule 20 induziert werden. Im dargestellten Ausführungsbeispiel weist vor allem die erste Statorempfangsspule 22a längere Anschlussleiter 64a, 64b innerhalb der Statorsendespule 20 auf. Diese Anschlussleiter 64a, 64b weisen demnach auch eine größere Fläche auf als die Anschlussleiter 64a, 64b der Statorempfangsspulen 22b, 22c, so dass eine Offsetspannung der Statorempfangsspule 22a ohne Kompensation durch die Leiterschleife 66 erhöht sein würde. Unter einer Offsetspannung kann in diesem Zusammenhang eine Spannung verstanden werden, die in den Statorempfangsspulen 22a, 22b, 22c ohne das Vorhandensein des Rotorelements 14 induziert wird. Um möglichst gut auswertbare Messsignale zu erhalten, sollten die Offsetspannungen bzw. die Offsets der Amplituden der Statorempfangsspulen 22a, 22b, 22c möglichst klein und optimal 0 V sein.

Die Asymmetrie der Statorempfangsspulen 22a, 22b, 22c bzw. ein Ausgleich der Offsetspannung kann dadurch kompensiert werden, dass zumindest die erste Statorempfangsspule 22a mit der größten zusätzlichen Fläche über die Leiterschleife 66 angeschlossen wird. In dieser Leiterschleife 66 kann von der Statorsendespule 20 eine Gegenspannung zur Offsetspannung induziert werden.

Die Leiterschleife 66 ist aus dem ersten Anschlussleiter 64a der ersten Statorempfangsspule 22a gebildet und bildet mit dem Abschnitt des ersten Anschlussleiters innerhalb der Statorsendespule 20 eine erste Spulenfläche und bildet außerhalb der Statorsendespule 20 mit dem zweiten Anschlussleiter 64b eine weitere, zweite Spulenfläche. Diese weitere Spulenfläche ist in der Fig. 6 schraffiert gekennzeichnet. Die Spulenflächen sind dabei so gewählt, dass insgesamt eine Spannung in den beiden Spulenflächen induziert wird, die die Offsetspannung im Wesentlichen ausgleicht. Beispielsweise kann der Fluss durch die zweite Spulenfläche (der der Spulenfläche multipliziert mit der Feldstärke entspricht) identisch (bis auf das Vorzeichen) zum Fluss der Leiterschleife sein, die durch die Anschlussleiter 64a, 64b innerhalb der Statorsendespule 20 gebildet wird.

Da die Richtung des durch die Statorsendespule 20 erzeugten elektromagnetischen Feldes außerhalb der Statorsendespule 20 entgegengesetzt zu dem Feld innerhalb der Sendespule 20 verläuft und die Amplitude außerhalb der Statorsendespule 20 in der Regel kleiner ist innerhalb der Sendespule 20, sollte die Leiterschleife 66 nahe der Sendespule 20 platziert werden und/oder im Außenbereich 56 der Sendespule 20 entgegengesetzt zu dem Abschnitt des ersten Anschlussleiters 64 innerhalb der Statorsendespule 20 verlaufen.

Die Leiterschleife 66 außerhalb der Statorsendespule 20 verläuft außerhalb der Statorsendespule 20 in eine Richtung entgegengesetzt zu der Richtung des Abschnitts des ersten Anschlussleiters 64a innerhalb der Statorsendespule 20. Dabei vergrößert die Leiterschleife 66 ausgehend von dem Durchtrittsbereich 58 in einem ersten Bereich 74a ihren radialen Abstand zu der Statorsendespule 20 und verkleinert in einem anschließenden zweiten Bereich 74b ihren radialen Abstand zu der Statorsendespule 20 wieder. In den beiden Bereichen 74a, 74b verläuft die Leiterschleife 66 radial außerhalb der Durchkontaktierung 60.

Der zweite Anschlussleiter 64b der ersten Statorempfangsspule 22a verläuft außerhalb der Statorsendespule 20 mit immer größer werdendem radialen Abstand zu der Statorsendespule 20 zu dem Leiterplatten-Anschluss 70 der ersten Statorempfangsspule 22a.

Bei der zweiten und dritten Statorempfangsspule 22b, 22c, die im dargestellten Ausführungsbeispiel kürzere und in etwa gleich lange Anschlussleiter 64a, 64b innerhalb der Statorsendespule 20 aufweisen, werden die Anschlussleiter 64a, 64b auch außerhalb der Statorsendespule 20 mit einem möglichst geringen Abstand voneinander in radialer Richtung zugeführt, da das elektromagnetische Feld der Statorsendespule 20 radial nach außen schnell abnimmt.

Grundsätzlich ist auch für mehr als eine Statorempfangsspule 22a, 22b, 22c eine Kompensation einer Asymmetrie innerhalb der Statorsendespule 20 durch einen außerhalb der Statorsendespule 20 gekrümmt verlaufenden Anschlussleiter 64a, 64b denkbar. Ziel ist es stets, die Statorempfangsspulen 22a, 22b, 22c inklusive ihrer Anschlussleiter 64a, 64b derart zu gestalten, dass eine Offsetspannung bei ungefähr 0V liegt und der Offset somit bestmöglich reduziert wird.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen. Beispielsweise sind unter den Begriffen "ein Anschlussleiter", "eine Statorempfangsspule", etc. synonym die Begriffe "wenigstens ein Anschlussleiter", "wenigstens eine Statorempfangsspule", etc. zu verstehen.

## Patentansprüche

1. Drehwinkelsensor (10), umfassend:
ein Statorelement (12) mit einer Statorsendespule (20) und wenigstens zwei zueinander winkelversetzten, gleichartig aufgebauten Statorempfangsspulen (22a, 22b, 22c), die auf einer Stator-Leiterplatte (18) angeordnet sind und die innerhalb der Statorsendespule (20) angeordnet sind;
ein bezüglich des Statorelements (12) um eine Drehachse (R) drehbar gelagertes Rotorelement (14), über das die Statorsendespule (20) mit den wenigstens zwei Statorempfangsspulen (22a, 22b, 22c) induktiv gekoppelt ist, so dass die induktive Kopplung von einem Drehwinkel zwischen dem Statorelement (12) und dem Rotorelement (14) abhängig ist und die Statorsendespule (20) in den wenigstens zwei Statorempfangsspulen (22) wenigstens zwei winkelabhängige Wechselspannungen induziert;
wobei die Statorsendespule (20) Spulen-Leiterbahnen (50) in einer ersten Ebene und einer zweiten Ebene der Stator-Leiterplatte (18) aufweist, wobei die Spulen-Leiterbahnen (50) in einer ersten Ebene der Stator-Leiterplatte (18) in einem Durchtrittsbereich (58) unterbrochen sind und über Durchkontaktierungen (60) mit Umleitungsbahnen (62) auf der zweiten Ebene verbunden sind;
wobei in der ersten Ebene Anschlussleiter (64a, 64b) der Statorempfangsspulen (22a, 22b, 22c) von Statorempfangsspulen-Anschlüssen (68) innerhalb der Statorsendespule (20) durch den Durchtrittsbereich (58) zu Leiterplatten-Anschlüssen (70) für die Statorempfangsspulen (22a, 22b, 22c) geführt sind;
wobei ein Anschlussleiter (64a) einer Statorempfangsspule (22a) zu einer Leiterschleife (66) gekrümmt ist, um unterschiedlich große Spulenflächen der Statorempfangsspulen (22a, 22b, 22c), die durch unterschiedlich lange Anschlussleiter (64a, 64b) innerhalb der Statorsendespule (20) erzeugt sind, auszugleichen,
wobei die Leiterschleife (66) durch einen Anschlussleiter (64a) gebildet ist, der innerhalb der Statorsendespule (20) in einer Umfangsrichtung auf den Durchtrittsbereich (58) zu verläuft und der außerhalb der Statorsendespule (20) in eine entgegengesetzte Richtung verläuft.

2. Drehwinkelsensor (10) nach Anspruch 1,
wobei die Leiterschleife (66) ausgehend von dem Durchtrittsbereich (58) in einem ersten Bereich (74a) ihren radialen Abstand zu der Statorsendespule (20) vergrößert und in einem anschließenden zweiten Bereich (74b), mit dem die Leiterschleife (66) mit einem Leiterplatten-Anschluss (70) verbunden ist, ihren radialen Abstand zu der Statorsendespule (20) verkleinert.

3. Drehwinkelsensor (10) nach einem der vorhergehenden Ansprüche, wobei Durchkontaktierungen (60) für die Umleitungsbahnen (62) radial innerhalb der Leiterschleife (66) angeordnet sind.

4. Drehwinkelsensor (10) nach einem der vorhergehenden Ansprüche, wobei die beiden Anschlussleiter (64a, 64b) einer Statorempfangsspule (22a, 22b, 22c) von den zugehörigen Statorempfangsspulen-Anschlüssen (68) durch den Durchtrittsbereich (58) parallel verlaufen.

5. Drehwinkelsensor (10) nach einem der vorhergehenden Ansprüche, wobei die Umleitungsbahnen (62) radial außerhalb der Spulen-Leiterbahnen (50) der Statorsendespule (20) in der zweiten Ebene verlaufen.

6. Drehwinkelsensor (10) nach einem der vorhergehenden Ansprüche, wobei jede der Statorempfangsspulen (22a, 22b, 22c) wenigstens zwei gegenläufige Teilwindungen (38a, 38b) aufweist; und/oder wobei jede der Statorempfangsspulen (22a, 22b, 22c) aus Leiterbahnen in zwei Ebenen der Stator-Leiterplatte (18) aufgebaut ist; und/oder wobei sich Leiterbahnen zweier Statorempfangsspulen (22a, 22b, 22c), die in unterschiedlichen Ebenen angeordnet sind, überkreuzen.

7. Drehwinkelsensor (10) nach einem der vorhergehenden Ansprüche, wobei das Rotorelement (14) eine Rotorempfangsspule (28) und eine Rotorsendespule (30) aufweist, die miteinander elektrisch verbunden sind; wobei die Rotorempfangsspule (28) mit der Statorsendespule (20) induktiv gekoppelt ist, so dass ein durch die Statorsendespule (20) erzeugtes elektromagnetisches Feld in der Rotorempfangsspule (28) einen Strom induziert, der durch die Rotorsendespule (30) fließt, so dass die Rotorsendespule (30) ein weiteres elektromagnetisches Feld erzeugt; wobei die wenigstens zwei Statorempfangsspulen (22a, 22b, 22c) mit der Rotorsendespule (30) induktiv gekoppelt sind, so dass die induktive Kopplung von einem Drehwinkel zwischen dem Statorelement (12) und dem Rotorelement (14) abhängig ist, und das von der Rotorsendespule (30) erzeugte weitere elektromagnetische Feld in den wenigstens zwei Statorempfangsspulen (22a, 22b, 22c) wenigstens zwei winkelabhängige Wechselspannungen induziert.

8. Drehwinkelsensor (10) nach Anspruch 7,
wobei die Rotorsendespule (30) in wenigstens zwei Teilwindungen (46a, 46b) aufgeteilt ist, die gegenläufig orientiert sind.

9. Drehwinkelsensor (10) nach Anspruch 8,
wobei die Teilwindungen (46a, 46b) der Rotorsendespule (30) sichelförmig ausgebildet sind.

## Claims

1. Rotational angle sensor (10), comprising:
a stator element (12) having a stator transmitting coil (20) and at least two identically constructed stator receiving coils (22a, 22b, 22c), which are angularly offset with respect to one another and are arranged on a stator printed circuit board (18) and within the stator transmitting coil (20);
a rotor element (14), which is mounted rotatably about an axis (R) of rotation with respect to the stator element (12) and via which the stator transmitting coil (20) is inductively coupled to the at least two stator receiving coils (22a, 22b, 22c), such that the inductive coupling is dependent on a rotational angle between the stator element (12) and the rotor element (14) and the stator transmitting coil (20) induces at least two angle-dependent AC voltages in the at least two stator receiving coils (22) ;
wherein the stator transmitting coil (20) has coil conductor tracks (50) in a first plane and a second plane of the stator printed circuit board (18), wherein the coil conductor tracks (50) in a first plane of the stator printed circuit board (18) are interrupted in a passage region (58) and are connected to diverting tracks (62) on the second plane via plated-through holes (60);
wherein, in the first plane, connection conductors (64a, 64b) of the stator receiving coils (22a, 22b, 22c) are led from stator receiving coil connections (68) within the stator transmitting coil (20) through the passage region (58) to printed circuit board connections (70) for the stator receiving coils (22a, 22b, 22c);
wherein a connection conductor (64a) of a stator receiving coil (22a) is curved to form a conductor loop (66) in order to compensate for differently sized coil areas of the stator receiving coils (22a, 22b, 22c) that are produced by connection conductors (64a, 64b) of different lengths within the stator transmitting coil (20),
wherein the conductor loop (66) is formed by a connection conductor (64a) which extends toward the passage region (58) in a circumferential direction within the stator transmitting coil (20) and which extends in an opposite direction outside the stator transmitting coil (20).

2. Rotational angle sensor (10) according to Claim 1, wherein the conductor loop (66), proceeding from the passage region (58), increases its radial distance with respect to the stator transmitting coil (20) in a first region (74a) and decreases its radial distance with respect to the stator transmitting coil (20) in an adjacent second region (74b), by which the conductor loop (66) is connected to a printed circuit board connection (70).

3. Rotational angle sensor (10) according to either of the preceding claims,
wherein plated-through holes (60) for the diverting tracks (62) are arranged radially within the conductor loop (66).

4. Rotational angle sensor (10) according to any of the preceding claims,
wherein the two connection conductors (64a, 64b) of a stator receiving coil (22a, 22b, 22c) extend parallel from the associated stator receiving coil connections (68) through the passage region (58).

5. Rotational angle sensor (10) according to any of the preceding claims,
wherein the diverting tracks (62) extend radially outside the coil conductor tracks (50) of the stator transmitting coil (20) in the second plane.

6. Rotational angle sensor (10) according to any of the preceding claims,
wherein each of the stator receiving coils (22a, 22b, 22c) has at least two oppositely directed partial windings (38a, 38b); and/or
wherein each of the stator receiving coils (22a, 22b, 22c) is constructed from conductor tracks in two planes of the stator printed circuit board (18); and/or
wherein conductor tracks of two stator receiving coils (22a, 22b, 22c) which are arranged in different planes cross one over another.

7. Rotational angle sensor (10) according to any of the preceding claims,
wherein the rotor element (14) has a rotor receiving coil (28) and a rotor transmitting coil (30), which are electrically connected to one another;
wherein the rotor receiving coil (28) is inductively coupled to the stator transmitting coil (20), such that an electromagnetic field generated by the stator transmitting coil (20) induces a current in the rotor receiving coil (28), said current flowing through the rotor transmitting coil (30), such that the rotor transmitting coil (30) generates a further electromagnetic field;
wherein the at least two stator receiving coils (22a, 22b, 22c) are inductively coupled to the rotor transmitting coil (30), such that the inductive coupling is dependent on a rotational angle between the stator element (12) and the rotor element (14), and the further electromagnetic field generated by the rotor transmitting coil (30) induces at least two angle-dependent AC voltages in the at least two stator receiving coils (22a, 22b, 22c).

8. Rotational angle sensor (10) according to Claim 7, wherein the rotor transmitting coil (30) is divided into at least two partial windings (46a, 46b) which are oriented in opposite directions.

9. Rotational angle sensor (10) according to Claim 8, wherein the partial windings (46a, 46b) of the rotor transmitting coil (30) are configured in sickle-shaped fashion.

## Revendications

1. Capteur d'angle de rotation (10) comprenant :
un élément de stator (12) pourvu d'une bobine d'émission de stator (20) et d'au moins deux bobines de réception de stator (22a, 22b, 22c), de même construction, qui sont décalées angulairement l'une de l'autre, qui sont disposées sur une carte de circuit imprimé de stator (18) et qui sont agencées à l'intérieur de la bobine d'émission de stator (20) ;
un élément de rotor (14) qui est monté de manière rotative sur un axe de rotation (R) par rapport à l'élément de stator (12) et qui réalise un couplage inductif entre la bobine d'émission de stator (20) et les au moins deux bobines de réception de stator (22a, 22b, 22c) de sorte que le couplage inductif soit dépendant d'un angle de rotation entre l'élément de stator (12) et l'élément de rotor (14) et que la bobine d'émission de stator (20) induise au moins deux tensions alternatives dépendant de l'angle dans les au moins deux bobines de réception de stator (22) ;
la bobine d'émission de stator (20) comportant des pistes conductrices de bobine (50) dans un premier plan et un deuxième plan de la carte de circuit imprimé de stator (18), les pistes conductrices de bobine (50) d'un premier plan de la carte de circuit imprimé de stator (18) étant interrompues dans une zone de passage (58) et étant reliées à des pistes de dérivation (62) dans le deuxième plan par le biais de contacts traversants (60) ;
des conducteurs de connexion (64a, 64b) des bobines de réception de stator (22a, 22b, 22c) étant guidés, dans le premier plan, depuis des bornes de bobine de réception de stator (68), situées à l'intérieur de la bobine d'émission de stator (20), vers des bornes de carte de circuit imprimé (70), destinées aux bobines de réception de stator (22a, 22b, 22c), à travers la zone de passage (58) ;
un conducteur de connexion (64a) d'une bobine de réception de stator (22a) étant incurvé pour former une boucle conductrice (66) afin de compenser les surfaces des bobines de réception de stator (22a, 22b, 22c) qui ont des tailles différentes et qui sont générées par des conducteurs (64a, 64b) de différentes longueurs situés à l'intérieur de la bobine d'émission de stator (20),
la boucle conductrice (66) étant formée par un conducteur de connexion (64a) qui s'étend à l'intérieur de la bobine d'émission de stator (20) dans une direction circonférentielle vers la zone de passage (58) et qui s'étend à l'extérieur de la bobine d'émission de stator (20) dans une direction opposée.

2. Capteur d'angle de rotation (10) selon la revendication 1,
la boucle conductrice (66) augmentant, à partir de la zone de passage (58), sa distance radiale par rapport à la bobine d'émission de stator (20) dans une première zone (74a) et diminuant dans une deuxième zone adjacente (74b), avec laquelle la boucle conductrice (66) est reliée à une borne de carte de circuit imprimé (70), sa distance radiale par rapport à la bobine d'émission de stator (20).

3. Capteur d'angle de rotation (10) selon l'une des revendications précédentes,
des contacts traversants (60) destinés aux pistes de dérivation (62) étant disposés radialement à l'intérieur de la boucle conductrice (66).

4. Capteur d'angle de rotation (10) selon l'une des revendications précédentes,
les deux conducteurs de connexion (64a, 64b) d'une bobine de réception de stator (22a, 22b, 22c) s'étendant parallèlement à travers la zone de passage (58) à partir des bornes de bobine de réception de stator associées (68) .

5. Capteur d'angle de rotation (10) selon l'une des revendications précédentes,
les pistes de dérivation (62) s'étendant dans le deuxième plan radialement à l'extérieur des pistes conductrices (50) de la bobine d'émission de stator (20).

6. Capteur d'angle de rotation (10) selon l'une des revendications précédentes,
chacune des bobines de réception de stator (22a, 22b, 22c) comportant au moins deux enroulements partiels (38a, 38b) de directions opposées ; et/ou
chacune des bobines de réception de stator (22a, 22b, 22c) étant réalisée à partir de pistes conductrices dans deux plans de la carte de circuit imprimé de stator (18) ; et/ou
les pistes conductrices de deux bobines de réception de stator (22a, 22b, 22c), qui sont disposées dans des plans différents, se croisant.

7. Capteur d'angle de rotation (10) selon l'une des revendications précédentes,
l'élément de rotor (14) comportant une bobine de réception de rotor (28) et une bobine d'émission de rotor (30) qui sont reliées électriquement l'une à l'autre ; la bobine de réception de rotor (28) étant couplée par induction à la bobine d'émission de stator (20) de sorte qu'un champ électromagnétique généré par la bobine d'émission de stator (20) induise dans la bobine de réception de rotor (28) un courant qui circule à travers la bobine d'émission de rotor (30) de sorte que la bobine d'émission de rotor (30) génère un autre champ électromagnétique ;
les au moins deux bobines de réception de stator (22a, 22b, 22c) étant couplées par induction à la bobine d'émission de rotor (30) de sorte que le couplage inductif soit dépendant d'un angle de rotation entre l'élément de stator (12) et l'élément de rotor (14), et l'autre champ électromagnétique généré par la bobine d'émission de rotor (30) induise dans les au moins deux bobines de réception de stator (22a, 22b, 22c) au moins deux tensions alternatives dépendant de l'angle.

8. Capteur d'angle de rotation (10) selon la revendication 7,
la bobine d'émission de rotor (30) étant divisée en au moins deux enroulements partiels (46a, 46b) qui sont orientés dans des directions opposées.

9. Capteur d'angle de rotation (10) selon la revendication 8,
les enroulements partiels (46a, 46b) de la bobine d'émission de rotor (30) étant falciformes.
